(19)

Europäisches
Patentamt
European
Patent Office
Office européen
des brevets

(11) **EP 1 892 960 A2**

(12) **EUROPEAN PATENT APPLICATION**

(43) Date of publication:
**27.02.2008 Bulletin 2008/09**

(51) Int Cl.:
***H04N 7/10*** (2006.01)

(21) Application number: **07114731.8**

(22) Date of filing: **22.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **07.03.2007 KR 20070022386**
**25.08.2006 KR 20060080963**

(71) Applicant: **Samsung Electronics Co., Ltd.**
**Suwon-si**
**442-742 Gyeonggi-do (KR)**

(72) Inventor: **Chang, Il-Kwon**
**Seoul (KR)**

(74) Representative: **Perkins, Dawn Elizabeth et al**
**Venner Shipley LLP**
**20 Little Britain**
**London EC1A 7DH (GB)**

(54) **Repeater Apparatus Linking Video Acquirement Apparatus and Video Recording Apparatus using Unshielded Twisted Pair Cable**

(57)     A video acquirement apparatus to acquire a video signal of monitoring area, to convert the acquired video signal into a differential video signal and a network stream, and to transmit the converted signal to a repeater apparatus using a UTP cable. The repeater apparatus supplies power to the video acquirement apparatus using the UTP cable, and receives the differential video signal and the network stream from the video acquirement apparatus. If network condition is unsatisfactory, the repeater apparatus outputs the received differential video signal to a video recording apparatus using one UTP cable. The video recording apparatus converts the output differential video signal using one UTP cable into a general video signal, and variably amplifies and records the converted general video signal.

**EP 1 892 960 A2**

**Description**

The present invention relates to a repeater apparatus to link a video acquirement apparatus with a video recording apparatus using an unshielded twisted pair (UTP) cable. More particularly, the present invention relates to a repeater apparatus to link a video acquirement apparatus with a video recording apparatus by using a UTP cable, and to transmit a differential video signal transmitted from the video acquirement apparatus using the UTP cable to the video recording apparatus.

A closed-circuit television (CCTV) system to provide surveillance and security acquires video of a monitoring area from a video acquirement apparatus, transmits and records the acquired video to a video recording apparatus through a video transmission line, and selectively outputs the video on a video display apparatus. The quality of a picture which is received to the video recording apparatus heavily depends on the video transmission line.

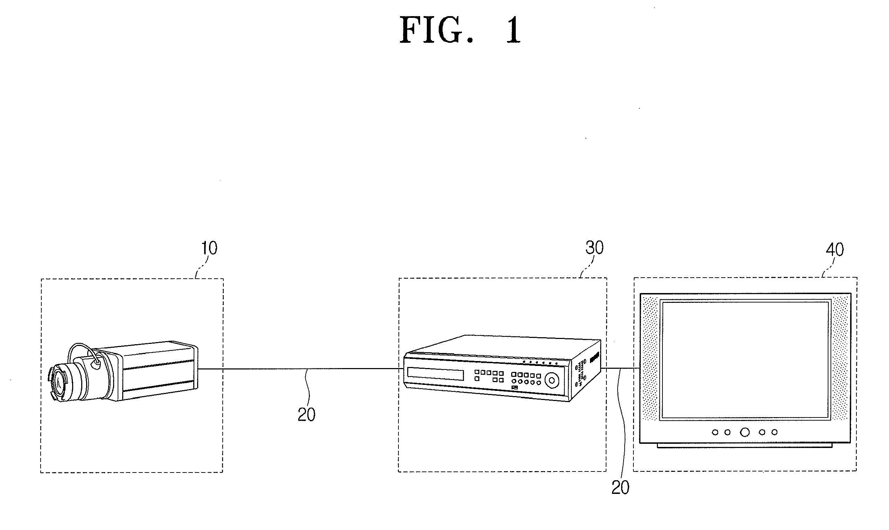

Figure 1 is a view schematically illustrating a general CCTV system. Referring to Figure 1, the general CCTV system transmits and records an analog video signal acquired from a video acquirement apparatus 10 to a video recording apparatus 30 through a coaxial cable 20, and selectively outputs the transmitted analog video signal on a video display apparatus 40 through the coaxial cable 20.

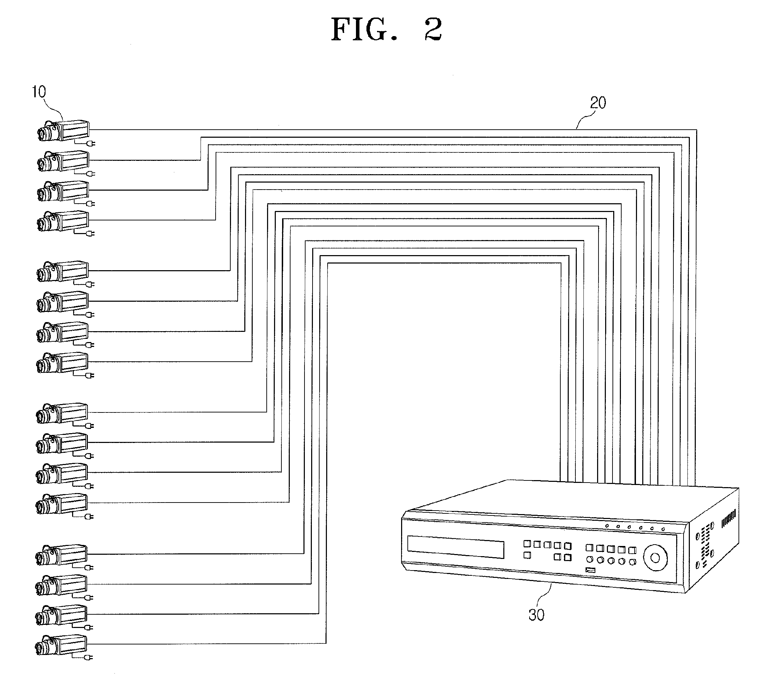

Figure 2 is a view illustrating a transmission line of a general multi-channel CCTV system. Referring to Figure 2, the multi-channel CCTV system may include a plurality of video acquirement apparatuses 10. The video acquirement apparatuses 10 include power supply lines to supply power, and transmit an acquired video signal to a video recording apparatus 30 through coaxial cables 20. For example, the CCTV system including sixteen channels as illustrated in Figure 2 requires sixteen coaxial cables corresponding to the sixteen channels.

The coaxial cable is outstanding for video transmission, but there are problems that the coaxial cable is sensitive to peripheral noise as a transmission distance becomes longer, and a gain of a video signal and high frequency response is lowered by signal loss. Also, construction is cumbersome by large size and weigh of the coaxial cable.

The foregoing aspects and utilities of the present invention may be achieved by providing a system transmitting a differential video signal which is superior in noise endurance characteristics.

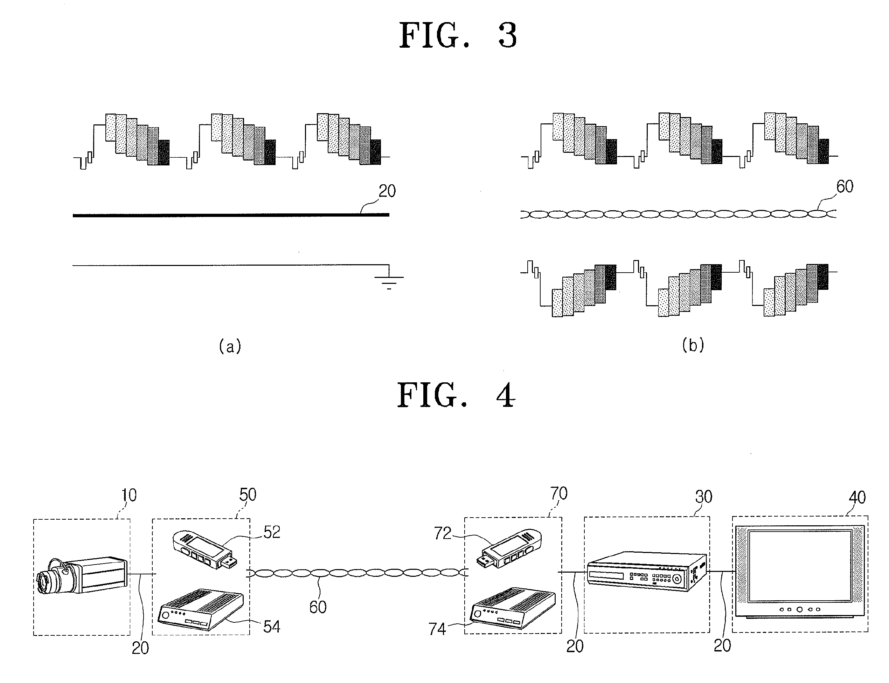

Figure 3 is a view illustrating a general analog video signal and a differential video signal. Referring to Figure 3, an analog video signal (a) acquired from the video acquirement apparatus 10, and transmitted through the coaxial cable 20, and a differential video signal (b) transmitted through a differential video transmission line 60 are illustrated. The differential video signal (b) includes of a regular video signal of the same phase as the analog video signal (a), and a reverse video signal of the reverse phase.

Figure 4 is a view illustrating a CCTV system transmitting a differential video signal. Referring to Figure 4, the CCTV system transmits an analog video signal acquired from a video acquirement apparatus 10 to a first converter 50 through a coaxial cable 20, and converts the analog video signal into a differential video signal. The first converter 50 transmits the converted differential video signal to a second converter 70 through a UTP cable 60 of a transmission line of a differential video signal. The second converter 70 converts the differential video signal into an analog video signal, and transmits the converted video signal to a video recording apparatus 30 through the coaxial cable 20.

The first converter 50 may be an unpowered manual converter 52, or a powered active converter 54 to adjust output size of a video signal to correspond to signal attenuation according to a length of a transmission line. The second converter 70 may be an unpowered manual converter 72, or a powered active converter 74 to compensate for a picture loss such as a signal gain and a frequency response by a transmission, and to automatically optimize or to manually adjust picture quality.

A transmission line to transmit a differential video signal is more economical than a coaxial cable to transmit a general video signal.

The CCTV system to transmit the differential video signal uses the coaxial cable 20 to link the video acquirement apparatus 10 with the first converter 50, and the second converter 70 with the video recording apparatus 30.

A power supply line is required to supply power to the respective video acquirement apparatuses 10 in a multi-channel CCTV system. Also, UTP cables 60 corresponding to the respective channels are required to transmit the video signal acquired through the channels to the video recording apparatus 30. As a result, an expense to implement the multi-channel CCTV system is high, and construction is cumbersome.

The present invention provides a repeater apparatus to reduce a transmission line by transmitting a video signal acquired from multi-channels through one UTP cable in a CCTV system using a method of transmitting a differential video signal.

Additional aspects and utilities of the present invention will be set forth in part in the description which follows and, in part, will be obvious from the description, or may be learned by practice of the invention.

The present invention also provides a repeater apparatus to supply power to respective multi-channels without respective power supply lines to supply power to the multi-channels.

The present invention also provides a repeater apparatus to convert into a network based surveillance system without requiring replacement of a transmission line, and to acquire a video signal of a monitoring area when occurring a network error in the network based surveillance system.

Also, the present invention provides a video acquirement apparatus to convert a video signal directly acquired to either a differential video signal or a network stream without a differential signal converting apparatus, and to transmit the converted signal to a repeater apparatus connected through a UTP cable.

Also, the present invention provides a video recording apparatus to directly receive differential video signal transmitted from a repeater apparatus using a UTP cable without requiring additional apparatuses and transmission lines to convert the differential video signal into a general video signal, and a control method thereof.

Additional aspects and utilities of the present invention will be set forth in part in the description which follows and, in part, will be obvious from the description, or may be learned by practice of the invention.

The foregoing and/or other aspects and utilities of the present invention may be achieved by providing a repeater apparatus including a plurality of ports linked though a plurality of video acquirement apparatuses and a plurality of cables, a power unit to supply power to the plurality of video acquirement apparatuses through the plurality of ports, and an output port through which a plurality of video signals transmitted from the plurality of video acquirement apparatuses through the plurality of ports are output to a video recording apparatus linked using one cable that includes a plurality of lines.

The apparatus may further include a power over Ethernet (POE) network hub to supply the power input through the power unit to the plurality of video acquirement apparatuses using the plurality of ports, and to output a plurality of network streams transmitted from the plurality of video acquirement apparatuses using the plurality of ports to the output port.

The apparatus may further include a switching unit to switch the output port in order to output one of the plurality of video signals transmitted from the plurality of video acquirement apparatuses using the plurality of ports and the plurality of network streams transmitted the plurality of video acquirement apparatuses using the plurality of ports.

The plurality of cables may be a plurality of unshielded twisted pair (UTP) cables, one cable may be one UTP cable, and a differential signal of the plurality of video signals transmitted from the plurality of video acquirement apparatuses using the plurality of ports is provided to respective UTPs included in the one UTP cable and is transmitted to the video recording apparatus.

The foregoing and/or other aspects and utilities of the present invention may also be achieved by providing a video acquirement apparatus including a photographing unit to acquire a video signal, and a converting unit to convert the video signal acquired from the photographing unit into a differential video signal using an active element, and to transmit the converted video signal to an external apparatus linked using a cable.

The external apparatus may be a repeater apparatus, and the video acquirement may further include a power unit to receive power from the repeater apparatus linked using the cable, and to supply the power to the photographing unit and the converting unit.

The converting unit may include first and second resistors, a non-inverted amplifier to adjust gains of the non-inverted amplification of the video signal according to variations of the first and second resistors and an inverted amplifier to adjust gains of the inverted amplification of the video signal according to variations of the first and second resistors.

The apparatus may further include a control signal processor to control at least one of the photographing unit and the converting unit according to a control signal transmitted to the cable through the repeater apparatus.

The apparatus may further include an audio processor to process an input audio signal and an audio converting unit to convert the audio signal into a differential audio signal.

The cable may be a UTP cable.

The foregoing and/or other aspects and utilities of the present invention may also be achieved by providing a video acquirement apparatus including a photographing unit to acquire a video signal, and a power unit to receive power from a repeater apparatus transmitting a video signal acquired from the photographing unit, and to supply the power to the photographing unit.

The foregoing and/or other aspects and utilities of the present invention may also be achieved by providing a video acquirement apparatus including a photographing unit to acquire a video signal, a converting unit to convert the video signal acquired from the photographing unit into a differential video signal using an active element, and to transmit the converted video signal to an external apparatus linked using a cable, a network interface unit to convert the video signal acquired from the photographing unit into a network stream and a transmitting and receiving unit to transmit the converted network stream to the external apparatus linked using the cable.

The external apparatus may be a repeater apparatus, the network transmitting and receiving unit may receive and supply power from the repeater apparatus linked using the cable, and the video acquirement apparatus may further include a power unit to supply the power from the network transmitting and receiving unit to the photographing unit, the converting unit, and the network interface unit.

The network transmitting and receiving apparatus may receive a control signal transmitted to the cable through the repeater apparatus.

The converting unit may include first and second resistors, a non-inverted amplifier to adjust gains of the non-inverted amplification of the video signal according to variations of the first and second resistors and an inverted amplifier to adjust gains of the inverted amplification of the video signal according to variations of the first and second resistors.

The cable may be a UTP cable.

The foregoing and/or other aspects and utilities of the present invention may also be achieved by providing a video recording apparatus including a differential signal input terminal to receive a differential video signal, a differential video processor to convert the differential video signal into a general video signal, and to variably amplify the converted general video signal and a recording medium to record the amplified general video signal.

The differential signal input terminal may include a plurality of input terminals, and receives the plurality of differential video signals to the respective input terminals.

The apparatus may further include a controller to control an amplification operation of the differential video processor according to set values of compensation elements in order to optimize picture quality by compensating at least one of the gain and the frequency response characteristic of the general video signal.

The compensation elements may comprise at least one of the gain and the frequency response characteristic of the general video signal, and the controller automatically sets the set values of the compensation elements according to a length of a cable to transmit a differential video signal input by the user.

The controller may adjust automatically set values of the compensation elements according to a user input.

The differential video processor may comprise a digital to analog (D/A) converter to convert the set value of the frequency response and the set value of the gain into voltage, a first variable gain amplifier to adjust frequency response of the general video signal according to the voltage corresponding to the set value of the converted frequency response, and a second variable gain amplifier to adjust gain of the general video signal according to the voltage corresponding to the set value of the converted gain.

The cable may be a UTP cable.

The foregoing and/or other aspects and utilities of the present invention may also be achieved by providing a surveillance system including a video acquirement apparatus to acquire a video signal of a monitoring area, and to convert the acquired video signal into a differential video signal and a network stream, a repeater apparatus to provide power to the video acquirement apparatus using a cable linking the video acquirement apparatus, and to output one of the differential video signal transmitted from the video acquirement apparatus and the network stream to one cable having a plurality of lines, and a video recording apparatus to convert the differential video signal output using one cable linking the repeater apparatus into a general video signal, to variably amplify the converted general video signal, and to record the amplified signal.

The cable linking the video acquirement apparatus with the repeater apparatus, and the repeater apparatus with the video recording apparatus may be a UTP cable.

The foregoing and/or other aspects and utilities of the invention may also be achieved by providing a video system, including one or more video acquirement apparatuses to acquire a video signal, a video recording apparatus to record the video signal, and a repeater apparatus to couple the one or more video acquirement apparatuses and the video recording apparatus, wherein the repeater apparatus is coupled to the video recording apparatus through an unshielded twisted pair (UTP) cable.

The foregoing and/or other aspects and utilities of the invention may also be achieved by providing a repeater apparatus usable with a network, the apparatus including a first output port to output one or more differential video signals, a second output port to output one or more network streams and a switching unit to detect a status of the network at predetermined intervals and to switch between the first output port and the second output port based on the status of the network.

The foregoing and/or other aspects and utilities of the invention may also be achieved by providing a method to improve a video signal, the method including outputting display information to set one or more compensation elements of the video signal, and confirming whether a length of a transmission line is input by a user according to the display information output so that, if confirmed, automatically setting values of the one or more compensation elements to correspond to the length of the transmission line input, and compensating the video signal according to the one or more compensation elements set.

The foregoing and/or other aspects and utilities of the invention may also be achieved by providing a method of operating a video system, the method including acquiring a video signal by one or more video acquirement apparatuses, providing the acquired video signal from the one or more acquirement apparatuses to a repeater apparatus and providing the acquired video signal from the repeater apparatus to a video recording apparatus through an unshielded twisted pair (UTP) cable.

The foregoing and/or other aspects and utilities of the invention may also be achieved by providing a method of operating a repeater apparatus, the method including detecting a status of a network at predetermined intervals and switching between a first output port to output one or more differential video signals and a second output port to output one or more network streams based on the status of the network so that a switching unit switches to the first output port to output the one or more differential video signals when the status corresponding to a network error has been detected.

A method of operating a surveillance system, the method including acquiring a video signal of a monitoring area by a video acquirement apparatus, converting the acquired video signal into a differential video signal and a network stream by the video acquirement apparatus, providing power to the video acquirement apparatus by a repeater apparatus ; using a cable linking the video acquirement apparatus, outputting the differential video signal transmitted from the video acquirement apparatus and the network stream to one cable having a plurality of lines by the repeater apparatus, and converting the differential video signal output using one cable linking the repeater apparatus into a general video signal, variably amplifying the converted general video signal, and recording the amplified signal by a video recording apparatus .

The foregoing and/or other aspects and utilities of the invention may also be achieved by providing computer-readable recording medium having embodied thereon a computer program to execute a method, wherein the method includes detecting a status of a network at predetermined intervals and switching between a first output port to output one or more differential video signals and a second output port to output one or more network streams based on the status of the network so that a switching unit switches to the first output port to output the one or more differential video signals when a network error status has been detected.

These and/or other aspects and utilities of the present invention will become apparent and more readily appreciated from the following description of the embodiments, taken in conjunction with the accompanying drawings of which:

Figure 1 is a view schematically illustrating a general closed circuit television (CCTV) system;

Figure 2 is a view illustrating a transmission line of a general multi-channel CCTV system; Figure 3 is a view illustrating a general analog video signal and a differential video signal; Figure 4 is a view illustrating a CCTV system transmitting a differential video signal;

Figure 5 is a view illustrating a transmission line of a multi-channel CCTV system including a repeater apparatus connecting a video acquirement apparatus and a video recording apparatus by using an unshielded twisted pair (UTP) cable according to an exemplary embodiment of the present invention;

Figure 6 is a view illustrating a video acquirement apparatus which is linked with a repeater apparatus using a UTP cable according to an exemplary embodiment of the present invention;

Figure 7A is a schematic block diagram of a video acquirement apparatus in which the video acquirement apparatus illustrated in Figure 6 is an analog video acquirement apparatus;

Figure 7B is a view illustrating a converting unit of the video acquirement apparatus of Figure 7A;

Figure 7C is a block diagram illustrating an analog video acquirement apparatus according to another exemplary embodiment of the present invention;

Figure 7D is a block diagram illustrating an analog video acquirement apparatus according to yet another exemplary embodiment of the present invention;

Figure 7E is a block diagram of a video acquirement apparatus in which the video acquirement apparatus illustrated in Figure 6 is an IP video acquirement apparatus;

Figure 7F is a view illustrating a power over Ethernet (PoE) receiving unit of the video acquirement apparatus of Figure 7E;

Figure 7G is a schematic block diagram of a video acquirement apparatus in which the video acquirement apparatus illustrated in Figure 6 is a multipurpose video acquirement apparatus;

Figure 8 is a view illustrating a repeater apparatus according to an exemplary embodiment of the present invention;

Figure 9A is a block diagram illustrating a repeater apparatus which is linked with an analog video acquirement apparatus using a UTP cable;

Figure 9B is a block diagram illustrating a repeater apparatus which is linked with an analog video acquirement apparatus using a UTP cable according to an exemplary embodiment of the present invention;

Figure 9C is a block diagram illustrating a repeater apparatus which is linked with an analog video acquirement apparatus using a UTP cable according to another exemplary embodiment of the present invention;

Figure 10 is a block diagram of a video recording apparatus according to an exemplary embodiment of the present invention;

Figure 11 is a view illustrating input terminals of a video recording apparatus according to an exemplary embodiment of the present invention;

Figure 12 is a view illustrating a differential video processor of a video recording apparatus according to an exemplary embodiment of the present invention;

Figure 13 is a view illustrating display information to control a differential video signal according to an exemplary embodiment of the present invention; and

Figure 14 is a flowchart illustrating a control method of a video recording apparatus according to an exemplary embodiment of the present invention.

Reference will now be made in detail to the embodiments of the present invention, examples of which are illustrated in the accompanying drawings, wherein like reference numerals refer to the like elements throughout. The embodiments are described below in order to explain the present invention by referring to the figures.

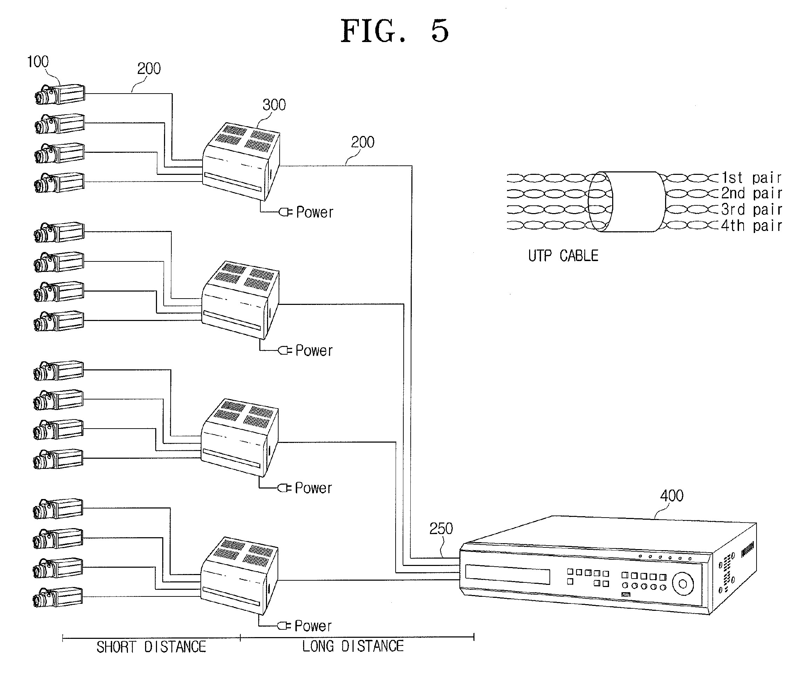

Figure 5 is a view illustrating a transmission line of a multi-channel CCTV system including a repeater apparatus linking a video acquirement apparatus and a video recording apparatus, using an unshielded twisted pair (UTP) cable according to an exemplary embodiment of the present invention.

Referring to Figure 5, the multi-channel CCTV system may include sixteen video acquirement apparatuses 100, four repeater apparatuses 300, and one video recording apparatus 400. That is, the CCTV system may have sixteen channels.

The video acquirement apparatus 100 converts a video signal to a differential video signal, and transmits the converted signal to the repeater apparatus 300 using a first set of UTP cable 200. That is, the first set of UTP cables 200 link a short distance between the four video acquirement apparatuses 100 and one repeater apparatus 300, and the four video acquirement apparatuses 100 transmit the differential video signals to one repeater apparatus 300 through the first set of UTP cables 200.

More specifically, the repeater apparatus 300 links the video acquirement apparatus 100 with the video recording apparatus 400 using the first set of UTP cables 200 and a second UTP cable 250. The repeater apparatus 300 supplies power which is input through a power supply line to the video acquirement apparatus 100 using the first set of UTP cables 200. In this embodiment, each repeater apparatus 300 supplies the power to the four video acquirement apparatuses 100.

Accordingly, the repeater apparatus 300 transmits the four differential video signals which are transmitted from the four video acquirement apparatuses 100 to the video recording apparatus 400 using the four second UTP cables 250. The second UTP cables 250 link a long distance between the repeater apparatus 300 and the video recording apparatus 400 through the second UTP cable 250 for four channels, respectively.

The first set of UTP cables 200 and the second UTP cable 250 may each include a plurality of pairs of UTPs, such as four. The differential video signal from one video acquirement apparatus 100 is transmitted using one pair of UTPs included in the first set of UTP cables 200 such that four differential video signals from the four video acquirement apparatuses 100 are transmitted to the video recording apparatus 400 via the four pairs of UTPs included in the second UTP cable 250.

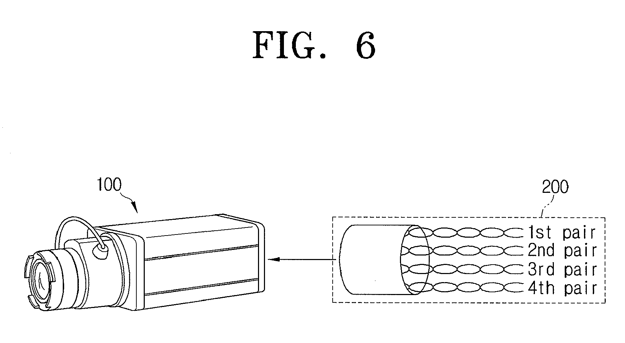

Figure 6 is a view illustrating a video acquirement apparatus which is linked with a repeater apparatus using a UTP cable according to an exemplary embodiment of the present invention.

Referring to Figure 6, the video acquirement apparatus 100 is connected with a first UTP cable 200 which is linked to a repeater apparatus 300. A hidden camera may be implemented as an example of the video acquirement apparatus 100. The hidden camera converts an analog video signal which is acquired from a preset monitoring area into a differential video signal, and transmits the converted differential video signal to the repeater apparatus 300 using the first UTP cable 200.

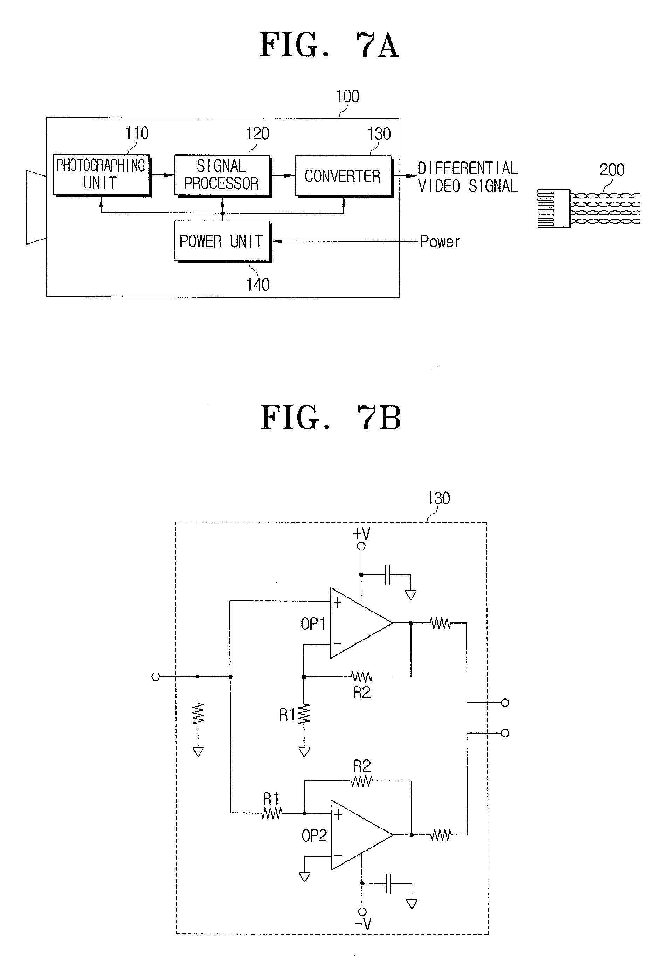

Figure 7A is a schematic block diagram of a video acquirement apparatus in which the video acquirement apparatus illustrated in Figure 6 is an analog video acquirement apparatus.

Referring to Figure 7A, a video acquirement apparatus 100 acquires and transmits an analog video signal. The video acquirement apparatus 100 may include a photographing unit 110, a signal processor 120, a converter 130, and a power unit 140.

The photographing unit 110 acquires an analog video signal by converting an optical video into an electric signal.

The signal processor 120 processes the video signal received from the photographing unit 110, and transmits the processed analog video signal to the converter 130 which will be explained below

The converter 130 converts the analog video signal received from the signal processor 120 into a differential video signal, and transmits the converted differential video signal to the repeater apparatus 300 using one of the four pairs of UTPs included in the first UTP cable 200.

The converter 130 is a dielectric active converter which adjusts an output size of a video signal to deal with the signal attenuation.

The power unit 140 supplies power to one of the four pairs of UTPs included in the first UTP cable 200 to the photographing unit 110, the signal processor 120, and the converter 130.

Figure 7B is a view illustrating a converting unit of the video acquirement apparatus of Figure 7A.

Referring to Figure 7B, the converter 130 is a dielectric active converter. The converter 130 converts a video signal into a differential video signal by adjusting gains of the video signal. The converter 130 may include a non-inverted amplifier Op1, an inverted amplifier Op2, and feedback parameters R1 and R2.

Equation 1 is used to adjust gains of the non-inverted amplifier Op1 and the inverted amplifier Op2.

[Equation 1]

$$Non-inverted\ amplification\ gain = 1 + \frac{R2}{R1}\ ,\ Inverted\ amplification\ gain = -\frac{R2}{R1}$$

Referring to equation 1, the differential video signal is generated, in which amplification gain and non-amplification gain are adjusted according to variations of the feedback parameters R1 and R2.

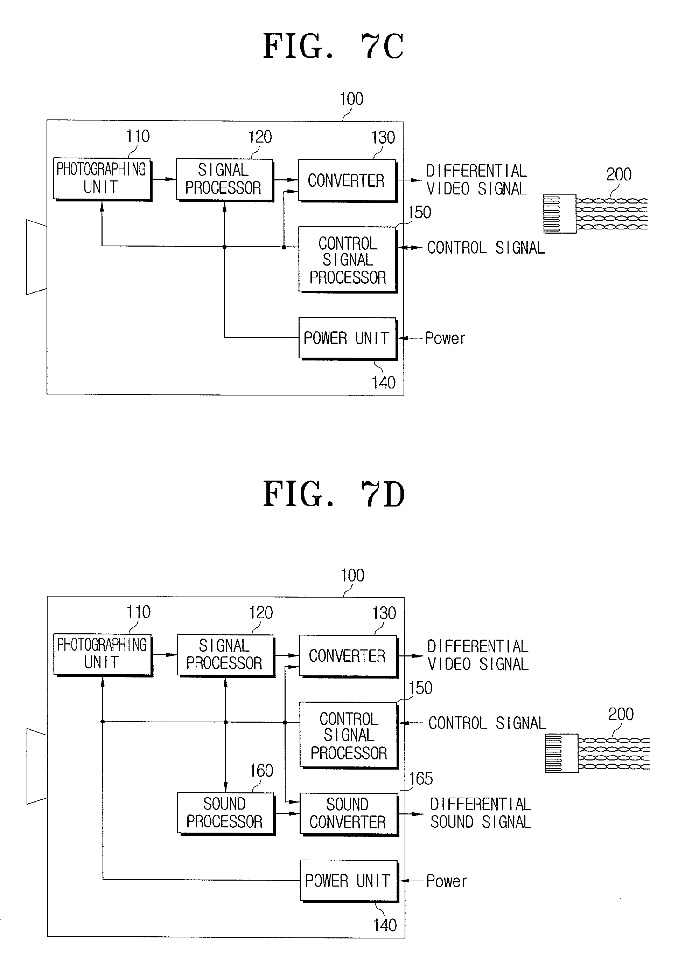

Figure 7C is a block diagram illustrating an analog video acquirement apparatus according to another exemplary embodiment of the present invention.

Referring to Figure 7C, the video acquirement apparatus 100 may include a photographing unit 110, a signal processor 120, a converter 130, a power unit 140, and a control signal processor 150.

The control signal processor 150 controls the photographing unit 110, the signal processor 120, and the converter 130 according to a control signal transmitted through a UTP cable 200. For example, if variables of the feedback parameters R1 and R2 are transmitted as the control signal, the control signal processor 150 controls the converter 130 to adjust the gains to the transmitted variables of the feedback parameters R1 and R2. If a signal setting a night mode or day mode is transmitted as the control signal, the control signal processor 150 controls the photographing unit 110 and the signal processor 120 to process a video in a night mode or day mode.

Figure 7D is a block diagram illustrating an analog video acquirement apparatus according to yet another exemplary embodiment of the present invention.

Referring to Figure 7D, the video acquirement apparatus 100 may include a photographing unit 110, a signal processor 120, a converter 130, a power unit 140, a control signal processor 150, a sound processor 160, and a sound converter 165.

The sound processor 160 processes an analog sound signal input from a microphone, and transmits the processed analog sound signal to a sound converter 165 which will be explained below

The sound converter 165 converts the analog sound signal transmitted from the sound processor 160 into a differential sound signal, and transmits the converted differential sound signal to the repeater apparatus 300 using one of four pairs of UTPs included in the UTP cable 200.

The sound converter 165 converts the differential sound signal transmitted through the UTP cable 200 into an analog sound signal, and transmits the converted analog sound signal to the sound processor 160. The sound processor 160 processes the analog sound signal transmitted from the sound converter 165, and outputs the sound through a speaker.

If a control signal of the sound signal is input using the UTP cable 200, the sound processor 160 and the sound converter 165 process the sound signal according to control of the control signal processor 150.

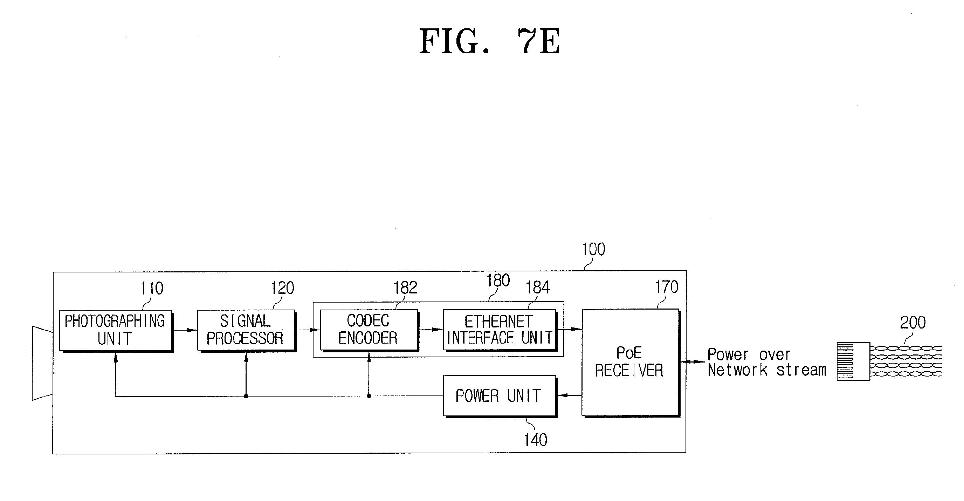

Figure 7E is a block diagram of a video acquirement apparatus in which the video acquirement apparatus illustrated in Figure 6 is an IP video acquirement apparatus.

Referring to Figure 7E, the video acquirement apparatus 100 is connected with a network. The video acquirement apparatus 100 acquires an analog video signal, and provides the acquired video signal in a network stream. The video acquirement apparatus 100 may include a photographing unit 110, a signal processor 120, a power unit 140, a power over Ethernet (PoE) receiver 170, and a network interface unit 180.

The signal processor 120 converts a video signal transmitted from the photographing unit 110 into a digital signal. The power unit 140 supplies power supplied from the PoE receiver 170, which will be explained below, to the photographing unit 110, the signal processor 120, and the network interface unit 180.

The PoE receiver 170 receives power from one of four pairs of UTPs included in a UTP cable 200, and transmits the network stream to one of the four pairs of UTPs except for a differential video signal transmitting UTP and a power supply UTP

The network interface unit 180 converts the digital video signal converted by the signal processor 120 into a network stream, and transmits the network stream to the PoE receiver 170. The network interface unit 180 may include a codec encoder 182 and an Ethernet interface unit 184. The codec encoder 180 converts a digital video signal into a network stream, and the Ethernet interface unit 184 transmits the network stream to the PoE receiver 170 according to TCP/IP protocol.

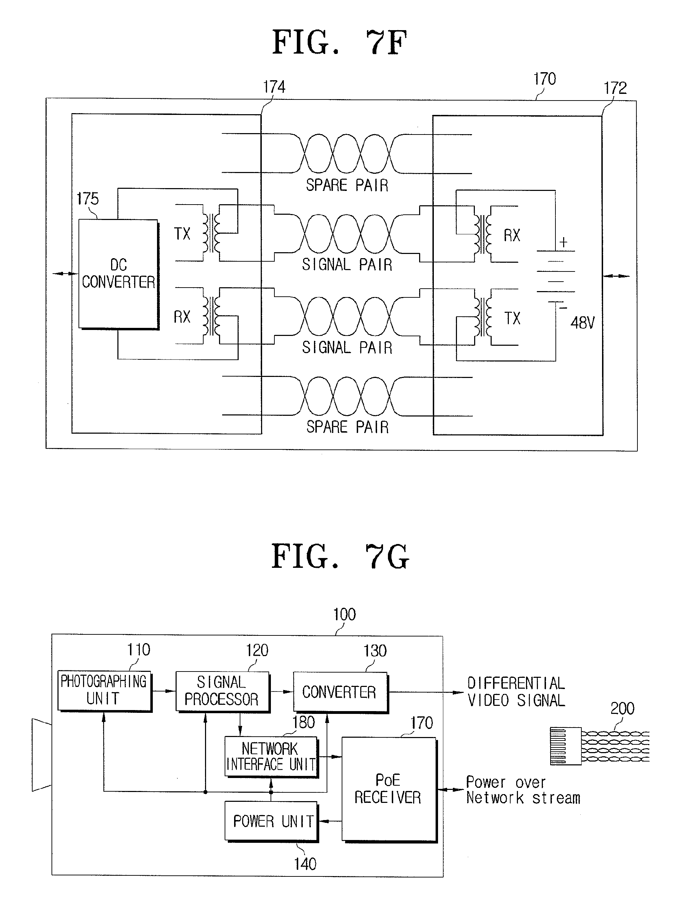

Figure 7F is a view illustrating a PoE receiving unit of the video acquirement apparatus of Figure 7E.

Referring to Figure 7F, the PoE receiver 170 may include a power sourcing apparatus (PSE) 172 and a power device (PD) 174.

The PSE 172 supplies power source of 48V to a signal pair line. The PD 174 converts the power source of 48V into a direct current (DC) using a DC converter 175, and outputs the converted power source. A network data line and a power line are shared. That is, power is supplied to the signal pair line, and the network stream is transmitted to one of the signal pair lines.

Figure 7G is a schematic block diagram of a video acquirement apparatus in which the video acquirement apparatus illustrated in Figure 6 is a multipurpose video acquirement apparatus.

Referring to Figure 7G, the video acquirement apparatus 100 is a video acquirement apparatus combining the analog video acquirement apparatus of the Figure 7A and the IP video acquirement apparatus of the Figure 7E. The video acquirement apparatus 100 may include a photographing unit 110, a signal processor 120, a converter 130, a power unit 140, a PoE receiver 170, and a network interface unit 180.

The video acquirement apparatus 100 converts a video signal which is acquired from a preset monitoring area into a differential video signal and a network stream, and transmits the converted video signal to a repeater apparatus 300 through a UTP cable 200.

If an error occurs in which information of a monitoring area is not obtained due to a network error in a network-based CCTV system, omission of the information of the monitoring area is prevented by transmitting the differential video signal.

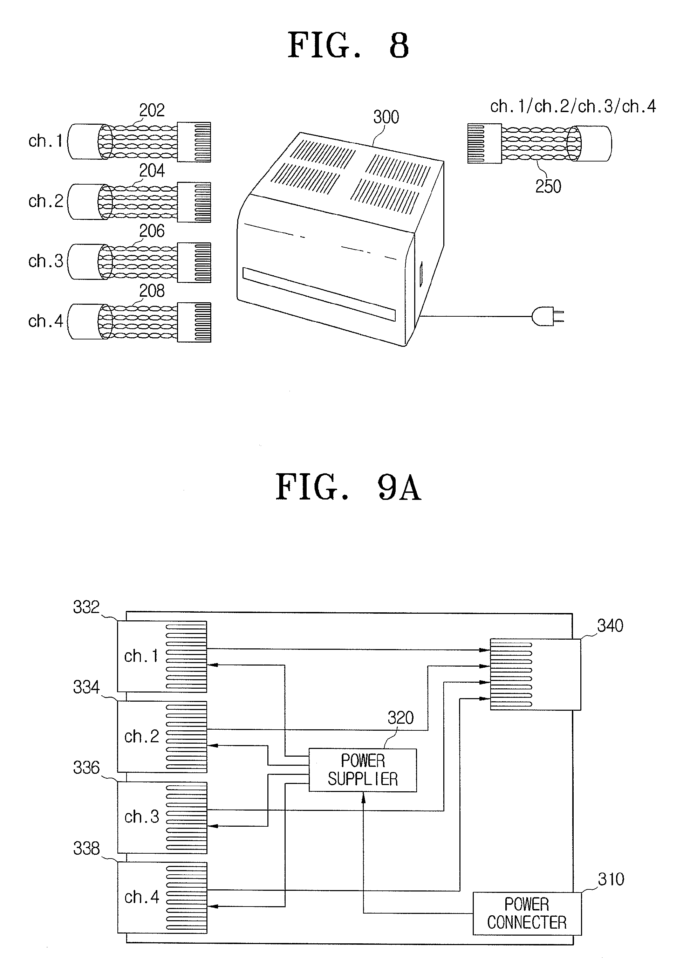

Figure 8 is a view illustrating a repeater apparatus according to an exemplary embodiment of the present invention.

Referring to Figure 8, the repeater apparatus 300 is linked with four video acquirement apparatuses (ch.1 to ch.4) through four UTP cables (202 to 208).

The repeater apparatus 300 supplies power input through a power supply line to the video acquirement apparatuses (ch.1 to ch4) using the four UTP cables (202 to 208). The repeater apparatus 300 transmits four differential video signals, which are transmitted from the video acquirement apparatuses (ch.1 to ch.4) through the four UTP cables (202 to 208), to a video recording apparatus 400 through four pairs of UTPs included in one of the second UTP cable 250.

Figure 9A is a block diagram illustrating a repeater apparatus which is linked with an analog video acquirement apparatus using a UTP cable.

Referring to Figure 9A, the repeater apparatus 300 may include a power connecter 310, a power supplier 320, and five UTP cable ports (332 to 340).

The power connecter 310 receives power through a power supply line. The power supplier 320 supplies power which is input from the power connecter 310 to the video acquirement apparatuses (ch.1 to ch.4) through the four UTP cables (202 to 208) which are connected to the four UTP cable ports (332 to 338).

The four UTP cables (202 to 208) linking the repeater apparatus 300 and the video acquirement apparatuses (ch.1 to ch.4) are linked to the four UTP cable ports (332 to 338).

The one remaining UTP cable port 340, which is an output cable port, is linked with the one UTP cable 250 linking the repeater apparatus 300 and the video recording apparatus 400.

The four differential video signals, which are transmitted from the video acquirement apparatuses (ch.1 to ch. 4) through the four UTP cables (202 to 208) linked to the four UTP cable ports (332 to 338), are transmitted to the video recording apparatus 400 through four pairs of UTPs included in one of the second UTP cable 250 linked to the output UTP cable port 340.

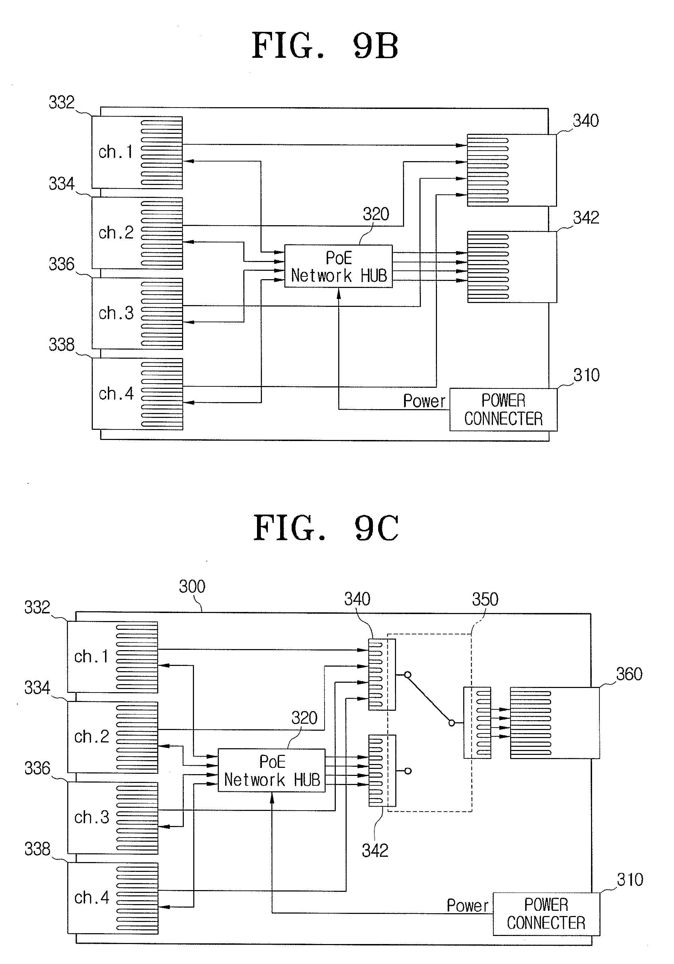

Figure 9B is a block diagram illustrating a repeater apparatus which is linked with an analog video acquirement apparatus using a UTP cable according to an exemplary embodiment of the present invention.

Referring to Figure 9B, the repeater apparatus 300 may include a power connecter 310, a PoE network hub 320, and six UTP cable ports 332 to 342.

The PoE network hub 320 provides power input from the power connecter 310 to the video acquirement apparatuses (ch.1 to ch.4) through four UTP cables (202 to 208) which are connected to four UTP cable ports (332 to 338).

The PoE network hub 320 transmits four network streams, which are transmitted from the video acquirement apparatuses (ch.1 to ch.4) through the four UTP cables (202 to 208) linked to the four UTP cable ports (332 to 338), to a network using four pairs of UTPs included in the UTP cable which are linked to the UTP cable port 342 to output a network stream.

That is, if the repeater apparatus 300 links the video acquirement apparatus 100 and the network, the repeater apparatus 300 includes the port to output a differential video signal 340 which outputs a differential video signal to a video recording apparatus 400 and the port to output a network stream 342 which outputs a network stream to the network.

A UTP cable which links the repeater apparatus 300 and the video recording apparatus 400 using the port to output a differential video signal 340, and a UTP cable which connects the repeater apparatus 300 and the network using the port to output a network stream 342 are provided.

Figure 9C is a block diagram illustrating a repeater apparatus which is linked with an analog video acquirement apparatus using a UTP cable according to another exemplary embodiment.

Referring to Figure 9C, the repeater apparatus 300 may include a power connecter 310, a PoE network hub 320, seven UTP cable ports (332 to 342, and 360), and a switching unit 350. The power connector 310, the PoE network hub 320, and six UTP cable ports (332 to 342) perform the same function as described with reference to Figure 9B.

The switching unit 350 switches either output of a port to output a differential video signal 340 or output of a port to output a network stream 342. That is, the repeater apparatus 300 checks a status of the network at regular intervals to switch the output of the port to output a differential video signal 340 where problems are occurred in the network.

If an error occurs in which information of a monitoring area is not obtained due to a network error in a network-based CCTV system, omission of the information of the monitoring area is prevented by transmitting the differential video signal.

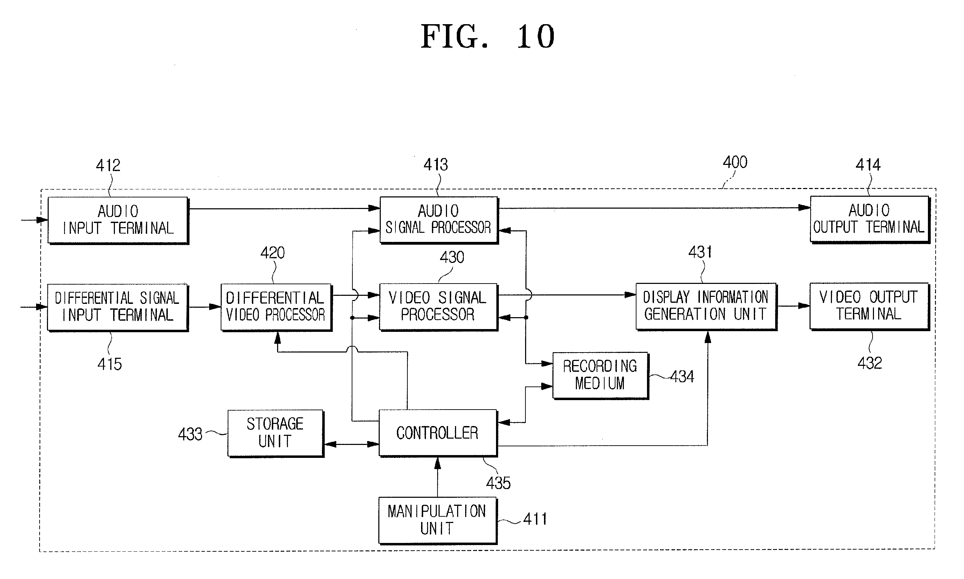

Figure 10 is a block diagram of a video recording apparatus according to an exemplary embodiment of the present invention.

Referring to Figure 10, the video recording apparatus 400 may include a manipulation unit 411, an audio input terminal 412, an audio signal processor 413, an audio output terminal 414, a differential signal input terminal 415, a differential video processor 420, a video signal processor 430, a display information generation unit 431, a video output terminal 432, a storage unit 433, a recording medium 434, and a controller 435.

The manipulation unit 411 is provided with buttons to generate input signals according to user's commands. If a button is selected through user's manipulation, the manipulation unit 411 generates an input signal corresponding to the selected button, and transfers the generated input signal to the controller 435 which will be explained below Generally, the manipulation unit 411 may be a manipulation panel provided on the video recording apparatus 400, a remote controller, a manipulation device separately provided, and an external device to input manipulation commands through a network.

The audio input terminal 412 receives an audio signal from outside and provides the received audio signal to the audio signal processor 413.

The audio signal processor 413 decodes the audio signal transferred from the audio input terminal 412 and provides the decoded audio signal to the audio output terminal 414 and the recording medium 434 which will be explained below

The audio output terminal 414 transfers the audio signal transferred from the audio signal processor 413 to an external audio output device.

The differential signal input terminal 415 receives a differential video signal through a terminal (e.g., RJ-45 connector) which is linked to a UTP cable 250, and provides the received differential video signal to the differential video processor 420 which will be explained below

The differential video processor 420 converts the differential video signal input through the differential signal input terminal 415 into a general video signal, and variably amplifies the converted general video signal. Specifically, the differential video processor 420 converts the differential video signal as described above into the general video signal, and variably amplifies the converted general video signal to optimize the picture quality by compensating at least one of compensation elements such as a gain and a frequency response characteristic of the general video signal under the control of the controller 435. The generation of display information to set the compensation elements and the setting of compensation elements according to user's manipulation commands will be described later.

The video signal processor 430 decodes the video signal transferred from the differential video processor 420, and provides the decoded video signal to the display information generation unit 431 and the recording medium 434 which will be explained below

The display information generation unit 431 generates display information for the setting and control of the video recording apparatus 400, and outputs the generated display information independently or in combination with the video signal transferred from the video signal processor 430.

The video output terminal 432 transfers the video signal received from the display information generation unit 431 to an external video display device.

The storage unit 433 stores a control algorithm to set and control the video recording apparatus 400. In addition, the storage unit 433 stores set values of the signal gain and the frequency response characteristic according to a length of the transmission line for an optimum picture quality through compensation of the elements.

The recording medium 434 stores video and audio signals through a recording medium interface provided in the video recording apparatus 400. For example, the recording medium may be a magnetic tape or disc, an optical disc, a memory stick, and so forth.

The controller 435 controls an entire operation of the video recording apparatus 400 according to the user's commands input through the manipulation unit 411, using the control algorithm pre-stored in the storage unit 433.

The controller 435 also controls the amplification operation of the differential video processor 420 according to the set values of the compensation elements in order to optimize the picture quality by compensating at least one of the gain and the frequency response characteristic of the general video signal.

In addition, the controller 435 generates a compensation element setting window through the display information generation unit 431 in order to set the set values of the compensation elements, and outputs the generated compensation element setting window to the external video display device, so that the set values of the compensation elements are set according to the input of the user's manipulation.

In addition, the controller 435 automatically sets the set values of the compensation elements, which have been set according to a length of the transmission line of the differential video signal input by the user, according to the set values stored in the storage unit 433. Fine adjustment of the set values is performed through the input of the user's manipulation. In particular, the output video signal is compensated according to the setting of the compensation elements as described above, so that the compensated video signal is directly displayed.

Accordingly, quality of output video is enhanced, and a user can easily set compensation elements of the video, so that user's convenience is improved.

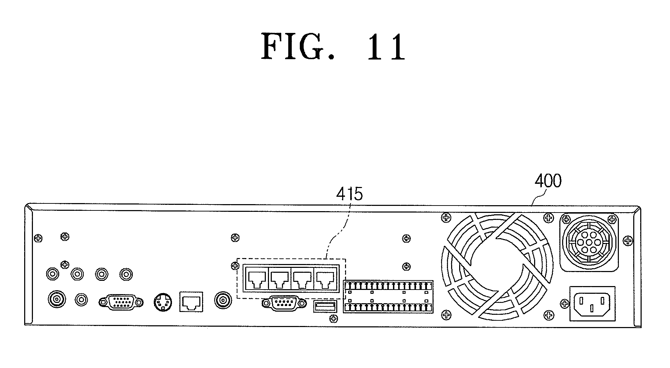

Figure 11 is a view illustrating input terminals of a video recording apparatus according to an exemplary embodiment of the present invention.

Referring to Figure 11, a differential signal input terminal 415 is provided in a rear of the video recording apparatus 400. That is, Figure 11 is a rear view of the video recording apparatus 400 provided in sixteen channels CCTV system illustrated in Figure 5, and the differential signal input terminal 415 includes four input terminals. Because a video acquired by four channels is transmitted to one UTP cable, a video acquired by sixteen channels is transmitted to four UTP cables.

More particularly, the differential signal input terminal 415 includes four input terminals including an input terminal linking a UTP cable transmitting a video which is acquired by channels 1 to 4, an input terminal linking a UTP cable transmitting a video which is acquired by channels 5 to 8, an input terminal linking a UTP cable transmitting a video which is acquired by channels 9 to 12, and an input terminal linking a UTP cable transmitting a video which is acquired by channels 13 to 16.

Conventionally, where a CCTV system is connected to a coaxial cable, a video recording apparatus includes sixteen input terminals, but sixteen channel CCTV systems according to an exemplary embodiment of the present invention comprise four input terminals.

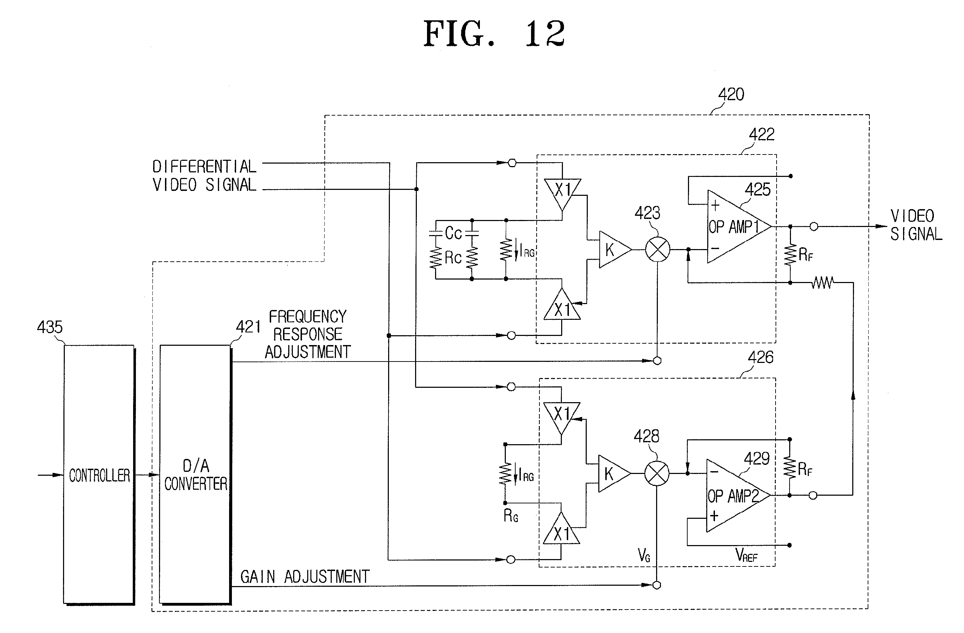

Figure 12 is a view illustrating a differential video processor of a video recording apparatus according to an exemplary embodiment of the present invention.

Referring to Figure 12, the differential video processor 420 may include a digital to analog (D/A) converter 421, a first variable gain amplifier 422, and a second variable gain amplifier 426.

If the set value of compensation elements such as a gain and frequency response characteristic is set according to user's manipulation input, the controller 435 transmits the set value to the D/A converter 421.

The D/A converter 421 converts the set value transmitted from the controller 435, and outputs the converted value as voltage. The D/A converter 421 outputs voltage corresponding to set value of adjusting a frequency response to the first variable gain amplifier 422, and outputs voltage corresponding to set value of gain adjustment to the second variable gain amplifier 426.

The first variable gain amplifier 422 may include a first voltage control multiplier 423, and a first operational amplifier (OP AMP) 425, and the second variable gain amplifier 426 may include a second voltage control multiplier 428, and the second operational amplifier (OP AMP) 429.

The first and second variable gain amplifiers 422 and 426 convert voltage level of a differential video signal which is input through the differential signal input terminal 415 using $R_G$ into current $I_{RG}$. The set value according to the frequency response adjustment and the set value of the gain adjustment is applied to the current $I_{RG}$ by the voltage control multiplier 423 and 428 included in the first and second variable gain amplifiers 422 and 426. The current $I_{RG}$ applying the respective set values is transmitted to an amplifying stage of the first and second OP AMPs 425 and 529 which have a current feedback structure.

The first variable gain amplifier 422 adjusts the frequency response of the differential video signal according to the set value, and the second variable gain amplifier 426 adjusts gains of the variable video signal according to the set value, and outputs the adjusted value. The output of the second variable gain amplifier 426 is operated to the amplifier stage of the first variable gain amplifier 422 as the feed back current such that a final analog video signal is output.

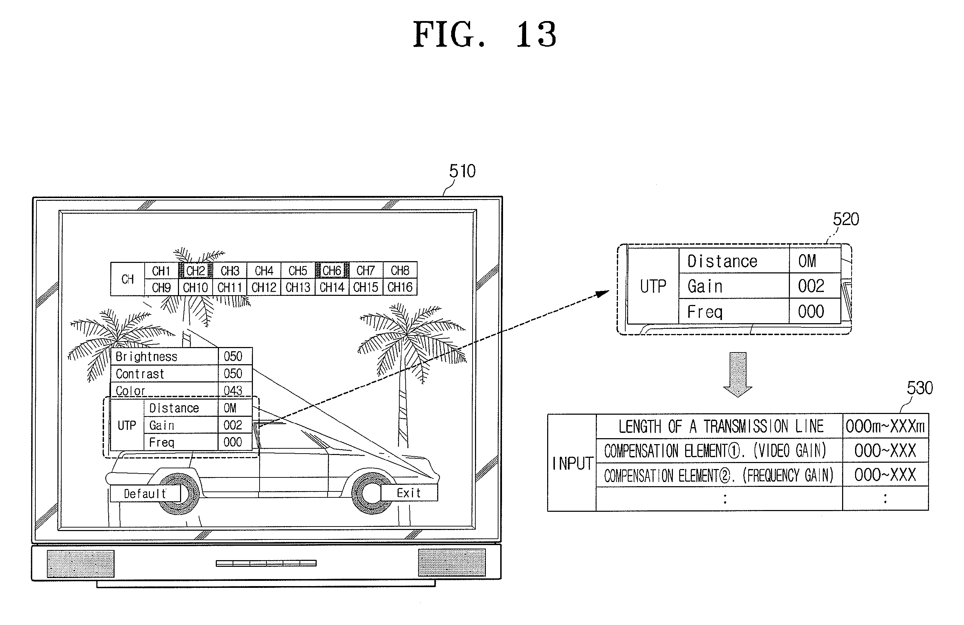

Figure 13 is a view illustrating display information to control a differential video signal according to an exemplary embodiment of the present invention.

Figure 13 is a view illustrating a set screen 510, a compensation element setting window 520, and a detailed compensation element set screen 530 of an external video display device on which display information such as channels, screen settings, and compensation element settings is displayed in combination.

The compensation element setting window 520 represents an entire distance (Distance) of the UTP cable, and set value of the compensation element (Gain, Freq) which is currently set. If one item of the compensation element setting window 520 is selected, the detailed compensation element set screen 530 is displayed.

If a user inputs distance of a transmission line on the detailed compensation element set screen 530, the Gain and Freq are set on the preset value according to the input value. And then, compensation elements may be set according to a fine set input by a user.

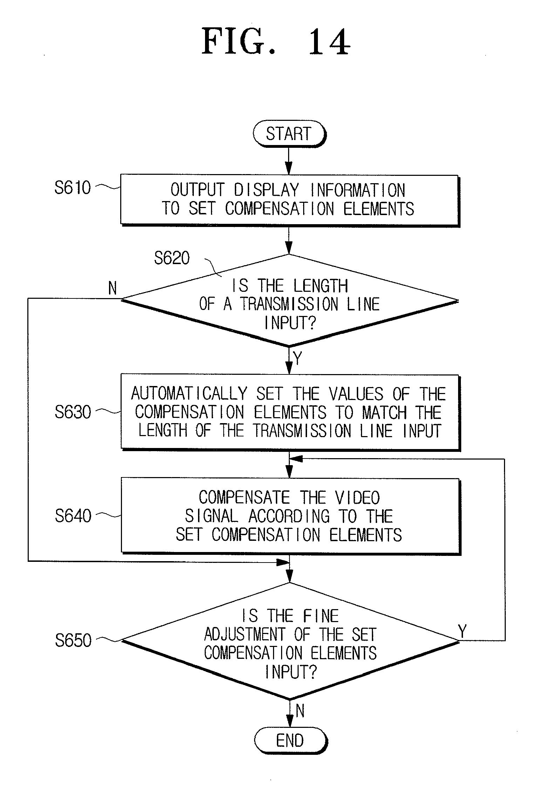

Figure 14 is a flowchart illustrating a control method of a video recording apparatus according to an exemplary embodiment of the present invention.

Referring to Figure 14, in operation S610, a controller 435 controls the display information generation unit 431 to output display information to set compensation elements.

Then, in operation S620, the controller 435 confirms whether a length of a transmission line is input by a user using a manipulation unit 411, according to the display information output in operation S610.

If it is confirmed that the length of the transmission line is input, in operation S630, the controller 435 automatically sets the values of the compensation elements to match the length of the transmission line input. Otherwise, in operation S650, the controller 435 determines whether fine adjustment of the set compensation elements is input through the manipulation unit 411.

For example, the controller 435 sets the compensation elements according to the values of the compensation elements which are preset according to the length of the transmission line and stored in a storage unit 433.

In operation S640, the controller 435 controls an amplification operation of a differential video processor 420 to compensate for the video signal according to the set compensation elements. Accordingly, the output video signal is compensated and output.

In operation S650, the controller 435 determines whether fine adjustment of the set compensation elements is input through the manipulation unit 411.

If the fine adjustment is input, the controller 435 performs the operation S640 again, so that the output video signal is compensated and output.

The UTP cable includes four pairs of UTPs, but it is merely an exemplary embodiment of the present invention. Accordingly, the UTP cable may include a plurality of UTPs other than four pairs. Although four video acquirement apparatuses are connected to one repeater apparatus as the UTP cables are implemented as four pairs of UTPs, it is merely an exemplary embodiment of the present invention. Accordingly, a plurality of video acquirement apparatuses other than four may be connected to one repeater apparatus according to, for example, a number of UTPs included in the UTP cables.

The present invention can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

As described above, transmission efficiency is improved by using a transmission method of a differential video signal which resists synchronous noise by using a UTP cable. Also, since a structure of a CCTV system becomes simplified, transmission line expense is reduced, and fabrication is more convenient when using a CCTV system using a UTP cable, rather than using a conventional CCTV system using a coaxial cable.

A plurality of video acquirement apparatuses positioned in a short distance are connected to a repeater apparatus, and power is supplied to the plurality of video acquirement apparatus through the repeater apparatus such that expense to implement lines supplying power is reduced. The repeater apparatus transmits a differential video signal acquired from a plurality of video acquirement apparatuses to the video acquirement apparatus positioned at long distance through one UTP cable, such that expense to implement transmission line is reduced.

Since a structure of the transmission line has the same structure of conventional network transmission line including a UTP cable and a network hub, conversion into a network based surveillance system is convenient and does not require replacement of the transmission line.

A differential video signal and a network stream are output simultaneously or selectively by using a UTP cable. As a result, when a network error occurs, the differential video signal is output selectively such that an information omission from a monitoring area is prevented.

A user receives directly a differential video signal without additional apparatuses and transmission lines to convert the differential video signal into a general video signal. As a result, when a CCTV system is implemented, the repeater apparatus according to an exemplary embodiment of the present invention improves an ability of an entire system and simplifies system structure.

A conventional differential video signal is controlled by a mechanical operation, but a user checks and simultaneously controls a compensation through a screen displayed according to set value using display information by using the repeater apparatus. Specifically, compensation elements according to the length of the transmission line besides a direct input of compensation elements are automatically preset such that the stored value is set. As a result, user's convenience is improved.

Although various embodiments of the present invention have been illustrated and described, it will be appreciated by those skilled in the art that changes may be made in these embodiments without departing from the scope of the invention as defined in the appended claims.

**Claims**

1. A repeater apparatus (300), comprising:

    a plurality of ports (332, 334, 336, 338) for connecting to a plurality of video acquirement apparatuses (100) via a plurality of cables (200);
    a power unit (320) configured to supply power to the plurality of video acquirement apparatuses via the plurality of ports (332, 334, 336, 338); and
    an output port (340, 342, 360) through which a plurality of video signals received at the plurality of ports (332, 334, 336, 338) from the plurality of video acquirement apparatuses (100) are output to a video recording apparatus (400) via one cable (250) that includes a plurality of lines.

2. The apparatus in claim 1, wherein the power unit (320) comprises:

    a power over Ethernet (POE) network hub (320) configured to supply power input through a power connector (310) to the plurality of video acquirement apparatuses (100) via the plurality of ports (332, 334, 336, 338), and to output a plurality of network streams received from the plurality of video acquirement apparatuses (100) via the plurality of ports to the output port (342, 360).

3. The apparatus in claim 2, wherein the plurality of video signals are output to a first output port (340), and the plurality of network streams are output to a second output port (342) further comprising:

    a switching unit (350) configured to switch a third output port (360) to output either the plurality of video signals from the first output port (340) or the plurality of network streams from the second output port (342).

4. The apparatus in any of the preceding claims, wherein:

    the plurality of cables (200) are a plurality of unshielded twisted pair (UTP) cables; and
    the one cable (250) is one UTP cable, and a differential signal of each of the plurality of video signals is provided to respective UTPs included in the one UTP cable.

5. A video acquirement apparatus, comprising:

    a photographing unit (110) to acquire a video signal; and
    a converting unit (130) configured to convert the video signal acquired from the photographing unit (110) into a differential video signal using an active element, and to transmit the converted video signal to an external apparatus linked using a cable (200).

6. The apparatus in claim 5, wherein:

    the external apparatus is a repeater apparatus (300); and further comprising:

        a power unit (140) configured to receive power from the repeater apparatus (300) linked using the cable (200), and to supply the power to the photographing unit (110) and the converting unit (130).

7. The apparatus in claim 5 or 6, wherein the converting unit (130) comprises:

    a first and second resistors;
    a non-inverted amplifier configured to adjust gains of the non-inverted amplification of the video signal according to variations of the first and second resistors; and
    an inverted amplifier configured to adjust gains of the inverted amplification of the video signal according to variations of the first and second resistors.

8. The apparatus in any one of claims 5 to 7, further comprising:

    a control signal processor (120) configured to control at least one of the photographing unit (110) and the converting unit (130) according to a control signal transmitted to the cable (200) through the repeater apparatus (300).

9. The apparatus in any one of claims 5 to 8, further comprising:

an audio processor (160) configured to process an input audio signal; and
an audio converting unit (165) configured to convert the audio signal into a differential audio signal.

10. The apparatus in any one of claims 5 to 9, wherein the cable (200) comprises:

a UTP cable.

11. The apparatus in any one of claims 5 to 10, further comprising:

a network interface unit (180) configured to convert the video signal acquired from the photographing unit (110) into a network stream; and
a transmitting and receiving unit (170) configured to transmit the converted network stream to the external apparatus linked using the cable (200).

12. The apparatus in claim 11, wherein:

the external apparatus is a repeater apparatus (300); and
the network transmitting and receiving unit (170) receives and supplies power from the repeater apparatus (300) linked using the cable (200); and
further comprising:

a power unit (140) configured to supply the power from the network transmitting and receiving unit (170) to the photographing unit (110), the converting unit (130), and the network interface unit (180).

13. The apparatus in claim 11 or 12, wherein the network transmitting and receiving apparatus (170) receives a control signal transmitted to the cable (200) through the repeater apparatus (300).

14. A video acquirement apparatus, comprising:

a photographing unit (110) to acquire a video signal; and
a power unit (140) configured to receive power from a repeater apparatus (300) which transmits a video signal acquired from the photographing unit (110), and to supply the power to the photographing unit (110).

15. A video recording apparatus (400), comprising:

a differential signal input terminal (415) configured to receive a differential video signal;
a differential video processor (420) configured to convert the differential video signal into a general video signal, and to variably amplify the converted general video signal; and
a recording medium (434) to record the amplified general video signal.

16. The apparatus in claim 15, wherein the differential signal input terminal (415) comprises a plurality of input terminals, and receives the plurality of differential video signals to the respective input terminals.

17. The apparatus in claim 15 or 16, further comprising:

a controller (435) configured to control an amplification operation of the differential video processor (420) according to set values of compensation elements in order to optimize picture quality by compensating at least one of the gain and the frequency response characteristic of the general video signal.

18. The apparatus in claim 17, wherein the compensation elements comprise:

at least one of the gain and the frequency response characteristic of the general video signal, and the controller (435) automatically sets the set values of the compensation elements according to a length of a cable to transmit a differential video signal input by the user.

19. The apparatus in claim 17, wherein the controller (435) adjusts automatically set values of the compensation elements according to a user input.

**20.** The apparatus in any one of claims 15 to 18, wherein the differential video processor (420) comprises:

a digital to analog (D/A) converter (421) configured to convert the set value of the frequency response and the set value of the gain into voltage;
a first variable gain amplifier (422) configured to adjust frequency response of the general video signal according to the voltage corresponding to the set value of the converted frequency response; and
a second variable gain amplifier (426) configured to adjust gain of the general video signal according to the voltage corresponding to the set value of the converted gain.

**21.** The apparatus in claim 18, wherein the cable comprises:

a UTP cable.

**22.** A surveillance system, comprising:

a video acquirement apparatus to acquire a video signal of a monitoring area, and to convert the acquired video signal into a differential video signal and a network stream;
a repeater apparatus to provide power to the video acquirement apparatus using a cable linking the video acquirement apparatus, and to output one of the differential video signal transmitted from the video acquirement apparatus and the network stream to one cable having a plurality of lines; and
a video recording apparatus to convert the differential video signal output using one cable linking the repeater apparatus into a general video signal, to variably amplify the converted general video signal, and to record the amplified signal.

**23.** A video system, comprising:

one or more video acquirement apparatuses to acquire a video signal; a video recording apparatus to record the video signal; and
a repeater apparatus to couple the one or more video acquirement apparatuses and the video recording apparatus,

wherein the repeater apparatus is coupled to the video recording apparatus through an unshielded twisted pair (UTP) cable.

**24.** The video system of claim 23, wherein:

the UTP cable has a number of twisted pairs corresponding to a number of the one or more video recording apparatuses.

**25.** The video system of claim 24, further comprising:

a number of UTP cables to connect the one or more video acquirement apparatuses to the repeater apparatus, wherein the number of UTP cables correspond to the number of the one or more video apparatuses.

**26.** A repeater apparatus usable with a network, the apparatus comprising:

a first output port to output one or more differential video signals;
a second output port to output one or more network streams; and
a switching unit to detect a status of the network at predetermined intervals and to switch between the first output port and the second output port based on the status of the network.

**27.** The repeater apparatus of claim 26, wherein:

the switching unit switches to the first output port to output the one or more differential video signals when the status corresponding to a network error has been detected.

**28.** A method to improve a video signal, the method comprising:

outputting display information to set one or more compensation elements of the video signal; and
confirming whether a length of a transmission line is input by a user according to the display information output so that, if confirmed,
automatically setting values of the one or more compensation elements to correspond to the length of the transmission line input; and
compensating the video signal according to the one or more compensation elements set.

**29.** The method of claim 28, further comprising:

determining whether an adjustment to the set compensation elements has been input and, if so, compensating the video signal according to the one or more compensation elements set.

**30.** A method of operating a video system, the method comprising:

acquiring a video signal by one or more video acquirement apparatuses; providing the acquired video signal from the one or more acquirement apparatuses to a repeater apparatus; and
providing the acquired video signal from the repeater apparatus to a video recording apparatus through an unshielded twisted pair (UTP) cable.

**31.** A method of operating a repeater apparatus, the method comprising:

detecting a status of a network at predetermined intervals; and
switching between a first output port to output one or more differential video signals and a second output port to output one or more network streams based on the status of the network so that a switching unit switches to the first output port to output the one or more differential video signals when the status corresponding to a network error has been detected.

**32.** A method of operating a surveillance system, the method comprising:

acquiring a video signal of a monitoring area by a video acquirement apparatus; converting the acquired video signal into a differential video signal and a network stream by the video acquirement apparatus;
providing power to the video acquirement apparatus by a repeater apparatus ;using a cable linking the video acquirement apparatus;
outputting the differential video signal transmitted from the video acquirement apparatus and the network stream to one cable having a plurality of lines by the repeater apparatus; and
converting the differential video signal output using one cable linking the repeater apparatus into a general video signal, variably amplifying the converted general video signal, and recording the amplified signal by a video recording apparatus.

**33.** A computer-readable recording medium having embodied thereon a computer program to execute a method according to any one of claims 28 to 32.

# FIG. 1

FIG. 2

# FIG. 3

(a)

(b)

EP 1 892 960 A2

# FIG. 4

# FIG. 5

SHORT DISTANCE      LONG DISTANCE

UTP CABLE

1st pair
2nd pair
3rd pair
4th pair

Power

EP 1 892 960 A2

# FIG. 6

100

200

1st pair
2nd pair
3rd pair
4th pair

# FIG. 7A

# FIG. 7B

# FIG. 7C

100

110                    120                    130

PHOTOGRAPHING UNIT  →  SIGNAL PROCESSOR  →  CONVERTER  →  DIFFERENTIAL VIDEO SIGNAL

150

CONTROL SIGNAL PROCESSOR  ←  CONTROL SIGNAL

POWER UNIT  ←  Power

140

200

# FIG. 7D

100

110                    120                    130

PHOTOGRAPHING UNIT  →  SIGNAL PROCESSOR  →  CONVERTER  →  DIFFERENTIAL VIDEO SIGNAL

150

CONTROL SIGNAL PROCESSOR  ←  CONTROL SIGNAL

160                    165

SOUND PROCESSOR  →  SOUND CONVERTER  →  DIFFERENTIAL SOUND SIGNAL

POWER UNIT  ←  Power

140

200

FIG. 7E

Power over
Network stream

200

100

170 PoE RECEIVER

180 184 ETHERNET INTERFACE UNIT

182 CODEC ENCODER

120 SIGNAL PROCESSOR

110 PHOTOGRAPHING UNIT

140 POWER UNIT

# FIG. 7F

SPARE PAIR

175

DC CONVERTER

174

TX

RX

SIGNAL PAIR

SIGNAL PAIR

170

172

RX

TX

+

48V

SPARE PAIR

# FIG. 7G

100

110
PHOTOGRAPHING UNIT

120
SIGNAL PROCESSOR

130
CONVERTER

DIFFERENTIAL VIDEO SIGNAL

200

180
NETWORK INTERFACE UNIT

170
PoE RECEIVER

Power over Network stream

140
POWER UNIT

# FIG. 8

# FIG. 9A

# FIG. 9B

# FIG. 9C

# FIG. 10

EP 1 892 960 A2

# FIG. 11

FIG. 12

# FIG. 13

# FIG. 14

START

S610 — OUTPUT DISPLAY INFORMATION
TO SET COMPENSATION ELEMENTS

S620 — IS THE LENGTH
OF A TRANSMISSION LINE
INPUT?

N

Y

S630 — AUTOMATICALLY SET THE VALUES OF THE
COMPENSATION ELEMENTS TO MATCH THE
LENGTH OF THE TRANSMISSION LINE INPUT

S640 — COMPENSATE THE VIDEO
SIGNAL ACCORDING TO THE
SET COMPENSATION ELEMENTS

S650 — IS THE FINE
ADJUSTMENT OF THE SET
COMPENSATION ELEMENTS
INPUT?

Y

N

END